# EUROPEAN PATENT APPLICATION

(11) **EP 1 595 643 A2**
(43) Date of publication of application: **16.11.2005**
(21) Application number: 05103573.1
(22) Date of filing: 29.04.2005
(51) Int. Cl.: B24B 5/00

(54) **Apparatus for grinding a disc-shaped element**

(30) Priority: 10.05.2004 SE 0401204
(71) Applicant: Alpha Sweden AB, 172 24 Sundbyberg (SE)
(72) Inventor: Sundqvist, Daniel, 168 59 Bromma (SE)
(74) Representative: Winblad, Hans Peter

(57) **Abstract**

Arrangement for grinding a disc-shaped element, comprising a chuck (20) that is designed to hold the disc element that is to be ground. The chuck (20) is rotatably mounted in and is lowered into a trough (18) for collection and removal of grinding fluid and grinding particles. A grinding machine (22), with a rotating grinding spindle (28) for holding a grinding tool, is supported on a sliding table (26) that has a through-passage (30) for the grinding spindle (28) and is configured to cover the trough (18) like a lid in a grinding position.

## Description

### TECHNICAL FIELD

The present invention relates to an arrangement for grinding a disc-shaped element, in particular the reverse side of a matrix or a so called stamper intended for the production of CD or DVD discs. The arrangement comprises a chuck, designed to hold the disc element that is to be ground, which chuck is mounted in such a way that it can rotate and is lowered into a trough for collection and removal of grinding fluid and grinding particles, and also a grinding machine with a rotating grinding spindle for holding a grinding tool, which grinding machine is mounted on a base in such a way that it can be moved between a grinding position, in which the grinding tool can carry out a transverse movement across the surface of the disc element in order to grind this, and a rear position in which the disc element can be removed from and put onto the chuck.

### BACKGROUND ART

Stampers, that are used for the production of CD and DVD discs in injection moulding machines are given, by the electroplating process that they undergo in association with the manufacture of the same, an uneven reverse side that must be accurately levelled by means of grinding before it is inserted in the injection moulding machine. Otherwise, irregularities in the reverse side of the stamper can cause errors in the pattern of the pressed discs. For grinding the reverse side of electroplated stampers, a grinding machine has previously been used of the type mentioned in the introduction. Using this, the grinding fluid in the trough could splash out and contaminate the outside of the machine and its surroundings.

### DISCLOSURE OF INVENTION

An object of the invention is to avoid the abovementioned disadvantages of the previously-known grinding machines. For this purpose, the arrangement according to the invention that is mentioned in the introduction is characterized in that the grinding machine is supported on a sliding table, that has a through-passage for the grinding spindle and is designed to cover the trough like a lid in the grinding position.

Additional characteristics and advantages of the invention are apparent from the following detailed description with reference to the attached drawings.

### BRIEF DESCRIPTION OF DRAWINGS

Figure 1 is a perspective view of a grinding arrangement according to the invention, in which a grinding machine for grinding matrices is in a position for collection or exchange of a grinding tool; and
Figure 2 is a corresponding perspective view of an arrangement according to the invention in which the grinding machine assumes a grinding position over a trough in which a matrix or stamper can be held on a rotating chuck that is lowered into the trough.

### DETAILED DESCRIPTION OF A PREFERRED EMBODIMENT

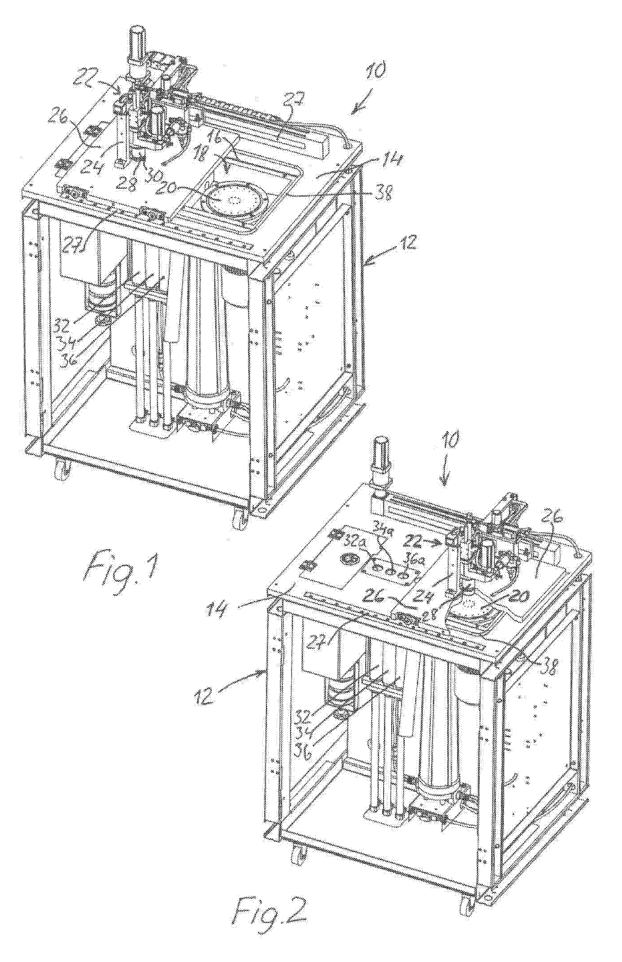

In Figures 1 and 2, a grinding arrangement for grinding the reverse side of electroplated stampers for the production of CD and DVD discs is represented in general by 10. The grinding arrangement 10 comprises a housing 12 with an upper plate 14 in which there is an opening 16 for an underlying trough 18. In the trough 18, there is a chuck 20 mounted in such a way that it can rotate around an essentially vertical axis. The chuck 20 is arranged to hold, preferably by means of a vacuum, a stamper (not shown) which is to be ground.

A grinding machine represented in general by 22 is mounted on a stand 24 which is mounted on the top side of a sliding table 26 designed as a plate. The grinding machine 22 has a vertically oriented grinding spindle 28 which passes closely through a hole or passage 30 in the sliding table 26. The sliding table 26 is mounted on the top side of the plate 14 in such a way that it can be moved in a linear direction by means of guides 27 between a rear position shown in Figure 1, in which the spindle 28 of the grinding machine can be inserted down into any one of three storage tubes 32, 34, 36 via openings 32a, 34a, 36a (Figure 2) for replacing or exchanging different grinding tools and in which position a ground matrix can be removed from the chuck and a new one can be put on, and a position (Figure 2) covering the trough 18, in which the sliding table 26 can cover the opening 16 like a lid such that it seals it by means of a seal 38 that circumscribes the trough opening 16. By this means, coolant and grinding fluid and grinding particles are prevented from splashing out of the trough and contaminating the surrounding environment and equipment.

The housing 12 can contain various additional equipment, such as drive and control units for the grinding machine 22, the sliding table 26, the chuck 20, fluid pumps, etc, in addition to the storage tubes 32, 34, 36 for grinding tools.

## Claims

1. Arrangement for grinding a disc-shaped element, in particular the reverse side of a stamper intended for the production of CD or DVD discs, comprising a chuck (20) that is designed to hold the disc element that is to be ground, which chuck (20) is rotatably mounted in and lowered into a trough (18) for collection and removal of grinding fluid and grinding particles, and a grinding machine (22) with a rotating grinding spindle (28) for holding a grinding tool, which grinding machine (22) is mounted on a base (14) in such a way that it can be moved between a grinding position, in which the grinding tool can carry out a traverse movement across the surface of the disc element in order to grind this, and a rear position in which the disc element can be removed from and put onto the chuck (20), **characterized in that** the grinding machine (22) is supported on a sliding table (26), that has a through-passage (30) for the grinding spindle (28) and is configured to cover the trough (18) like a lid in the grinding position.

2. Arrangement according to Claim 1, **characterized in that** the sliding table (26) is configured, in a retracted position thereof, to allow access of the grinding spindle (28), via the through-passage (30), to a tool store (32, 34, 36) for replacing or exchanging grinding tools.

3. Arrangement according to Claim 1 or 2, **characterized in that** the sliding table (26) is essentially a flat plate.

4. Arrangement according to any one of Claims 1-3, **characterized in that** the sliding table (26) can be moved in a linear direction on the base (14) by means of guides (27).

5. Arrangement according to any one of Claims 1-4, **characterized in that** a sealing element (38) circumscribes an upper peripheral edge of the trough (18) for making a sealed closure of this by means of the sliding table (26).
